# EUROPEAN PATENT APPLICATION

(11) **EP 2 667 290 A2**
(43) Date of publication of application: **27.11.2013**
(21) Application number: 13168529.9
(22) Date of filing: 21.05.2013
(51) Int. Cl.: G06F 3/0481, G06F 3/0482

(54) **Stereoscopic user interface and displaying method thereof**

(30) Priority: 22.05.2012 US 201261650156 P; 08.08.2012 TW 101128646
(71) Applicant: ASUSTeK Computer Inc., Peitou 11259 (TW)
(72) Inventor: Lee, Yen-Chun, 11259 Peitou (TW); Lai, Chih-Ning, 11259 Peitou (TW); Hsieh, Pin-Sheng, 11259 Peitou (TW); Lin, Fang-Ping, 11259 Peitou (TW)
(74) Representative: Zimmermann, Tankred Klaus

(57) **Abstract**

A stereoscopic user interface displayed on a display module of an electronic device is disclosed. The stereoscopic user interface includes a polyhedron which has a plurality of regions. Each of the regions displays different information. When one of the regions receives a first command, the region moves to a first position from the polyhedron. The first position is connected to the polyhedron or apart from the polyhedron. A displaying method of a stereoscopic user interface is also disclosed.

## Description

### BACKGROUND OF THE INVENTION

### 1. Field of the Invention

The disclosure relates to a user interface and a displaying method thereof and, more particularly, to a stereoscopic user interface and a displaying method thereof.

### 2. Description of Related Art

As science technology develops, an electronic device has functions with more diversity. For example, settings of a digital television include video settings and sound settings, and the video settings include sub settings, such as luminance and contrast. For another example, various application programs may be installed at a smart phone and classified into different categories, and thus it is rather inconvenient to adjust the setting or open an application program. When the setting or the application program is at a lower level of the menu, the user should remember its position and search it level by level in the menu, which is rather inconvenient.

Nowadays, the common method for displaying menu information is a tree arrangement method. The user should select a main option first, and then sub options in the main option are displayed. However, the differences between selectable options and unselectable options are not clear, and thus it wastes time to find a specific option.

### SUMMARY OF THE INVENTION

A stereoscopic user interface and a displaying method thereof are disclosed. The stereoscopic user interface and the displaying method can highlight selected options via an interface, and display contents of a main option and a sub option at the same time, which decreases inputting times in selecting or switching between the options, shortens the searching time and simplifies the operation procedure.

The displaying method of the stereoscopic user interface is applied to an electronic device which includes a display module. The displaying method includes displaying a polyhedron at the display module, wherein the polyhedron includes a plurality of regions, and each of the regions displays different information; and moving one of the regions on the polyhedron to a first position from the polyhedron when the region receives a first command, wherein the first position is connected to the polyhedron or apart from the polyhedron.

The stereoscopic user interface is displayed at a display module of an electronic device. The stereoscopic user interface includes a polyhedron which includes a plurality of regions, and each of the regions displays different information. When one of the regions on the polyhedron receives a first command, the region moves from the polyhedron to the first position, and the first position is connected to the polyhedron or apart from the polyhedron.

These and other features, aspects and advantages of the present invention will become better understood with regard to the following description, appended claims, and accompanying drawings.

### BRIEF DESCRIPTION OF THE DRAWINGS

FIG. 1 is a flow chart showing a method for displaying menu information in a first embodiment;

FIG. 2 is a flow chart showing a method for displaying menu information in a second embodiment;

FIG. 3A is a schematic diagram showing a stereoscopic user interface of menu information in a third embodiment;

FIG. 3B is a schematic diagram showing a stereoscopic user interface of menu information in a fourth embodiment;

FIG. 3C is a schematic diagram showing a stereoscopic user interface of menu information in a fifth embodiment;

FIG. 3D is a schematic diagram showing a stereoscopic user interface of menu information in a sixth embodiment;

FIG. 3E is a schematic diagram showing a stereoscopic user interface of menu information in a seventh embodiment;

FIG. 4 is a schematic diagram showing a stereoscopic user interface of menu information in a eighth embodiment; and

FIG. 5 is a block diagram showing a system of an electronic device.

### DESCRIPTION OF THE EMBODIMENTS

A stereoscopic user interface and a displaying method thereof are illustrated with relating figures, and the same symbols denote the same components.

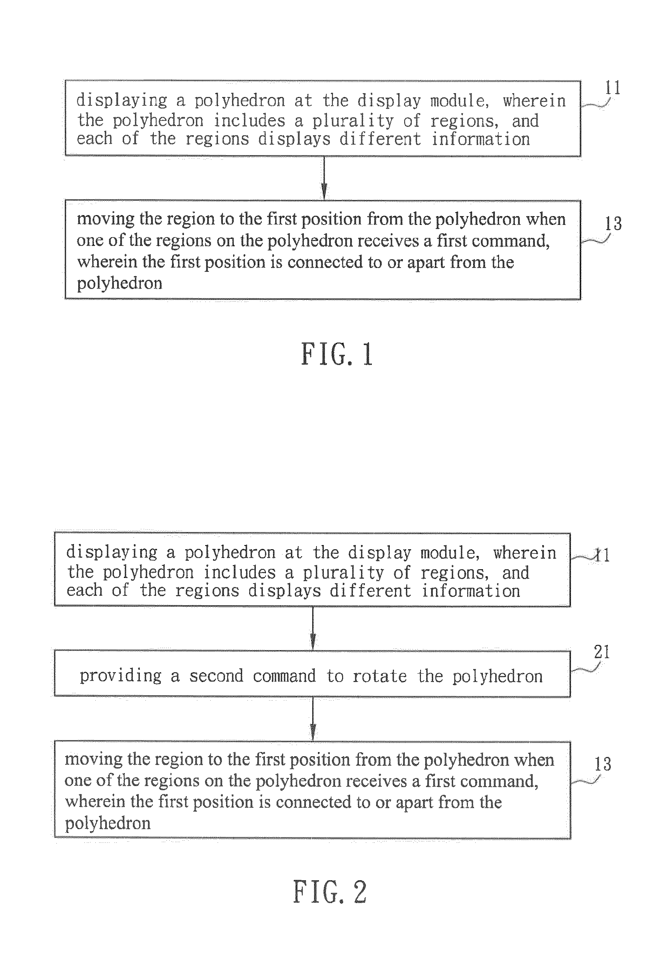

FIG. 1 is a flow chart showing a method for displaying menu information in a first embodiment. The displaying method of the stereoscopic user interface is applied to an electronic device, and the electronic device includes a display module. The electronic device may be a television, a smart phone or a tablet computer, which is not limited herein.

In step 11, a polyhedron is displayed at the display module. The polyhedron includes a plurality of regions, and each of the regions displays different information. The information may be a display setting information of a television or application program category information of a smart phone, which is not limited herein. The information includes at least a first menu and a second menu regardless of the form of the information. The first menu is a main menu, and the second menu is a sub menu corresponding to the first menu. The first menu is displayed at a first region of the polyhedron, and the second menu is displayed at a second region of the polyhedron regardless of the content of the first menu and the second menu.

The main menu includes at least a main option and the sub menu includes at least a sub option. The first region includes at least a first sub region and the second region includes at least a second sub region. The main option is displayed at the first sub region and the sub option is displayed at the second sub region. For example, in the setting information of a television, the first menu is an image adjustment menu which is the main option of the main menu. The second menu is a luminance adjustment menu or a contrast adjustment menu which is the sub option of the sub menu in the image adjustment menu.

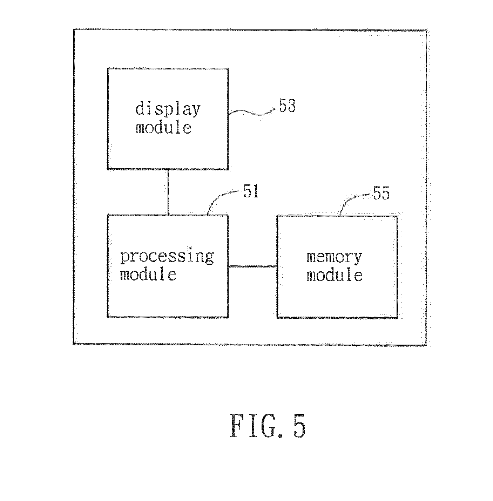

Please refer to FIG. 5, the user provides an input signal of a calling event to the stereoscopic user interface by pressing a key on a remote control or an electronic device, via touch control or body control. After the electronic device receives the input signal, a processing module 51 calls the stereoscopic user interface and displays it at the display module 53. Then, the processing module 51 reads the information in a memory module 55 and displays the information at the stereoscopic user interface.

In step 13, when one of the regions on the polyhedron receives a first command, the region is moved to the first position from the polyhedron. In practical operation, the user may provide the first command, such as selecting the information or selecting an option of a menu, to one of the regions on the polyhedron by pressing a button on a remote control or an electronic device, or touch control. When the first command is received at the region, the processing module 51 processes according to the selected option and outputs a display signal to the display module 53. The display module 53 moves the region to the first position from the polyhedron according to the display signal, and the first position is connected to the polyhedron or apart from the polyhedron, so as to enhance visual effect.

Moreover, when one of the regions on the polyhedron receives a first command, the polyhedron may be rotated to a predetermined angle of view. For example, if the information includes a first menu and a second menu, and the polyhedron includes a first region and a second region. When the selected menu is the second menu displayed at the second region, the processing module 51 outputs a rotating signal according to the selected menu, and the display module 53 displays the polyhedron rotated to a predetermined angle of view according to the rotating display signal. For example, the displaying region of the second region is larger than that of the first region, so as to let the user check the information more clearly.

The polyhedron may be a hexahedron, an octahedron or a dodecahedron, which is not limited herein. In an embodiment, the polyhedron is a regular hexahedron. Moving the region to the first position from the polyhedron in step 13 may include mapping the region to the first position from the polyhedron or rotating the region by an angle to the first position from the polyhedron, which is not limited herein. Different display methods may be used according to different requirements to move the region to the first position from the polyhedron, so as to highlight the selected menu and differentiate it from the unselected menu.

Thus, contents of different information can be displayed at the same time via the method for displaying menu information, and the interface can decrease selection errors or solve the inconvenience in switching and looking for information repeatedly. Additionally, the visual effect of information selecting can be improved by moving the region to the first position from the polyhedron.

FIG. 2 is a flow chart showing a method for displaying menu information in a second embodiment. Please refer to FIG. 2 and FIG. 5. In the embodiment, the displaying method of the stereoscopic user interface is almost the same as that in the embodiment stated above, and thus only the added steps are illustrated, and other steps are omitted herein.

In step 21, a second command is provided to rotate the polyhedron. In practical operation, the user may provide the second command as the input signal of the polyhedron rotating event by pressing a button on a remote control or an electronic device, via touch control or body control. After the processing module 51 receives the second command, it outputs a rotating signal according to the second command. The display module 53 displays the rotated polyhedron according to the rotating signal.

For example, when the user presses the direction buttons of a television control to input the second command as an option switching event, the polyhedron rotates correspondingly, and the displayed contents of the information change. If the information includes a first menu and a second menu, the contents of the second menu change correspondingly when the contents of the first menu change.

As stated above, a stereoscopic user interface is also provided, and it is displayed at a display module of an electronic device. The stereoscopic user interface includes a polyhedron. The polyhedron includes a plurality of regions, and each of the regions displays different information. When one of the regions on the polyhedron receives a first command, the region is moved to the first position from the polyhedron, and the first position is connected to the polyhedron or apart from the polyhedron.

The information includes at least a first menu and a second menu. The first menu is a main menu, and the second menu is a sub menu corresponding to the first menu. The first menu is displayed at a first region of the polyhedron, and the second menu is displayed at a second region of the polyhedron.

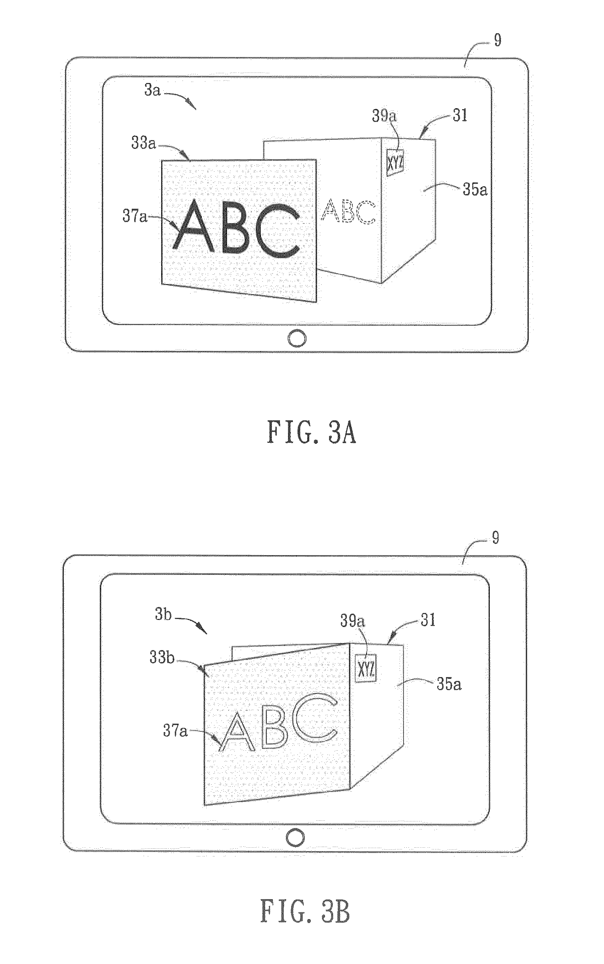

As shown in FIG. 3A, the stereoscopic user interface 3a includes a polyhedron 31, and the polyhedron 31 includes a first region 33a and a second region 35a. The first menu 37a displayed in the first region 33a is selectable information, and the second menu 39a displayed in the second region 35a is unselectable information. Since the relating technology of the polyhedron, the first menu and the second menu is illustrated above, it is omitted herein for a concise purpose. Only the visual effect of the stereoscopic user interface 3a and the polyhedron 31 is further illustrated with FIG. 3A to FIG. 3D.

In the embodiment, the polyhedron 31 is a hexahedron, and it may also be an octahedron or a dodecahedron, which is not limited herein. When the first menu 37a is selected, the first region 33a including the first menu 37a is mapped to the first position from the polyhedron 31, so as to highlight visual effect.

The user can see the positions of the main menu and the sub menu more easily by displaying the first menu and the second menu at the same time. Thus, the user can select the information more conveniently and does not need to enter the main menu to find the sub menu.

As shown in FIG. 3B, in the embodiment, the first region 33b including the first menu 37a on the stereoscopic user interface 3b is rotated by an angle to the first position from the polyhedron 31, which is different from the stereoscopic user interface 3a and can highlight visual effect.

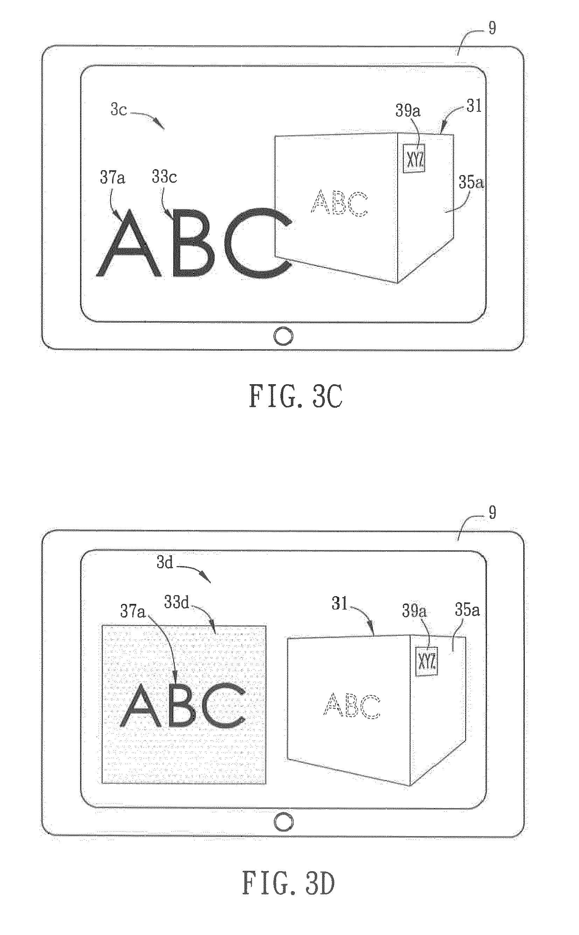

As shown in FIG. 3C, in the embodiment, although the first region 33c including the first menu 37a on the stereoscopic user interface 3c is mapped to the first position from the polyhedron 31, the first region 33c of the stereoscopic user interface 3c only includes the content of the first menu 37a, which is different from the stereoscopic user interface 3a. Thus, the contents of the first menu 37a, such as words or figures, are mapped to the first position, so as to highlight visual effect.

As shown in FIG. 3D, in the embodiment, the first region 33d including the first menu 37a on the stereoscopic user interface 3d is moved to the first position which is apart from the polyhedron 31, such as a position beside the first region, which can highlight visual effect and is not limited herein.

Furthermore, the first menu includes a main option, the second menu includes a sub option, the first region includes a first sub region and the second region includes a second sub region. The main option is displayed at the first sub region and the sub option is displayed at the second sub region.

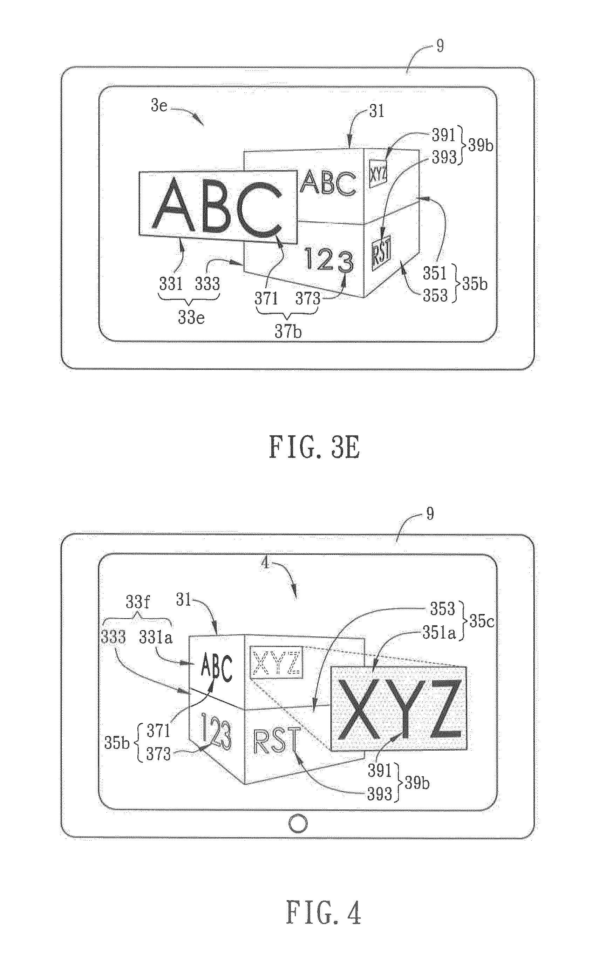

As shown in FIG. 3E, in the embodiment, the first menu 37b includes two main options 371 and 373, the second menu 39b includes two sub options 391 and 393. The first region 33e includes two first sub regions 331 and 333, and the second region 35b includes two second sub regions 351 and 353. The main options are respectively displayed at the first sub regions and the sub options are respectively displayed at the second sub regions.

As shown in FIG. 4 and FIG. 5, the electronic device further includes a processing module (not shown), and the processing module controls the display module 9 to display the polyhedron 31 rotating to a predetermined angle of view according to a second command. Moreover, when one sub option 391 of the second menu 39b is selected, the processing module also controls the display module 9 to display the polyhedron 31 rotating to the predetermined angle of view, and the second sub region 351a including the selected sub option 391 is moved to the first position from the polyhedron 31.

When the user inputs the second command as an option switching event, such as pressing the left button of a television control, the polyhedron 31 of the stereoscopic user interface 3e is rotated towards left correspondingly. Thus, the second menu 39b is displayed obviously at the display module 9. In the embodiment, when the sub option 391 of the second menu 39b is selected, not only the polyhedron 31 is rotated towards left, but also the second sub region 351a including the selected sub option 391 is mapped or rotated by an angle to the first position from the polyhedron 31, which is not limited herein.

In sum, via the polyhedron and the enhanced display effect of the selected information, when the information includes the main menu and the sub menu, the stereoscopic user interface and the displaying method can display at least two menus at the first region and the second region of the polyhedron at the same time. Thus, the user can see the information contents of multiple menus at one time and switch by rotating the polyhedron. Moreover, the selected information is moved to the first position from the polyhedron and thus it can be presented more clearly to the user, which shortens the searching time for a specific option and is more appropriate for intuitive operation.

Although the present invention has been described in considerable detail with reference to certain preferred embodiments thereof, the disclosure is not for limiting the scope of the invention. Persons having ordinary skill in the art may make various modifications and changes without departing from the scope of the invention. Therefore, the scope of the appended claims should not be limited to the description of the preferred embodiments described above.

## Claims

1. A displaying method of a stereoscopic user interface (3a) applied to an electronic device, wherein the electronic device includes a display module (9), the displaying method **characterized by** comprising following steps:
displaying a polyhedron (31) at the display module (9), wherein the polyhedron (31) includes a plurality of regions, and each of the regions displays different information; and
moving one of the regions on the polyhedron (31) to a first position from the polyhedron (31) when the region receives a first command, wherein the first position is connected to the polyhedron (31) or apart from the polyhedron (31).

2. The displaying method according to claim 1, **characterized in that** the information includes at least a first menu (37a) and a second menu (39b), the first menu (37a) is a main menu, the second menu (39b) is a sub menu corresponding to the first menu (37a), the first menu (37a) is displayed at a first region (33c) of the polyhedron (31), and the second menu (39b) is displayed at a second region (35a) of the polyhedron (31).

3. The displaying method according to claim 2, **characterized in that** the first menu (37a) includes at least a main option (371), the second menu (39b) includes at least a sub option (391), the first region (33c) includes at least a first sub region (331), the second region (35a) includes at least a second sub region (351), the main option (371) is displayed at the first sub region (331) and the sub option (391) is displayed at the second sub region (351).

4. The displaying method according to claim 1, **characterized in that** moving the region from the polyhedron (31) to the first position includes mapping the region to the first position from the polyhedron (31).

5. The displaying method according to claim 1, **characterized in that** moving the region from the polyhedron (31) to the first position includes rotating the region by an angle to the first position from the polyhedron (31).

6. The displaying method according to claim 1, **characterized in that** the displaying method further includes the following step:
providing a second command to rotate the polyhedron (31).

7. The displaying method according to claim 1, **characterized in that** when one of the regions on the polyhedron (31) receives a first command, the polyhedron (31) is rotated to a predetermined angle of view.

8. A stereoscopic user interface (3a) displayed at a display module (9) of an electronic device, **characterized in that** the stereoscopic user interface (3a) includes a polyhedron (31) which includes a plurality of regions, each of the regions displays different information, when one of the regions on the polyhedron (31) receives a first command, the region moves from the polyhedron (31) to the first position, and the first position is connected to the polyhedron (31) or apart from the polyhedron (31).

9. The stereoscopic user interface (3a) according to claim 8, **characterized in that** the information includes at least a first menu (37a) and a second menu (39b), the first menu (37a) is a main menu, the second menu (39b) is a sub menu corresponding to the first menu (37a), the first menu (37a) is displayed at a first region (33c) of the polyhedron (31), and the second menu (39b) is displayed at a second region (35a) of the polyhedron (31).

10. The stereoscopic user interface (3a) according to claim 9, **characterized in that** the first menu (37a) includes at least a main option (371), the second menu (39b) includes at least a sub option (391), the first region (33c) includes at least a first sub region (331), the second region (35a) includes at least a second sub region (351), the main option (371) is displayed at the first sub region (331), and the sub option (391) is displayed at the second sub region (351).
